# EUROPÄISCHE PATENTSCHRIFT

(11) **EP 2 667 080 B1**
(45) Veröffentlichungstag und Bekanntmachung des Hinweises auf die Patenterteilung: **24.06.2020**
(21) Anmeldenummer: 13002642.0
(22) Anmeldetag: 21.05.2013
(51) Int. Cl.: F16P 3/08, B26D 7/00

(54) **Sicherheitsvorrichtung**
Safety device
Dispositif de sécurité

(30) Priorität: 22.05.2012 DE 102012010003
(43) Veröffentlichungstag der Anmeldung: 27.11.2013
(73) Patentinhaber: Bizerba SE & Co. KG, 72336 Balingen (DE)
(72) Erfinder: Deigendesch, Markus, 72365 Ratshausen (DE)
(74) Vertreter: Huber, Meik

(56) Entgegenhaltungen:
- EP-A1- 1 086 789
- EP-A2- 0 501 218
- DE-A1- 4 331 741
- DE-A1- 10 360 052
- DE-A1-102007 032 827

## Beschreibung

Die Erfindung betrifft eine Sicherheitsvorrichtung nach den Merkmalen des Oberbegriffs des Anspruchs 1.

In der Praxis müssen Maschinen mit rotierenden Teilen überwacht werden, um eine Sicherheitshaube oder eine Abdeckhaube erst nach Stillstand bzw. erst nach dem Unterschreiten einer niedrigen unkritischen Drehzahl freizugeben.

Eine solche Vorrichtung ist in der EP 0 501 218 A2 gezeigt. Dort werden je Achse zwei Drehsensoren verwendet, um eine erhöhte Sicherheit zu erzielen.

Die DE 103 60 052 A1 zeigt ein Sicherheitsüberwachungsgerät für eine Drehmaschine. Es ist vorgeschlagen, zwei orthogonale Signale eines Resolvers mit einem Hüllkurvendemodulator auszuwerten und daraus auf den Zustand eines rotierenden Teils zurückzuschließen.

Der Erfindung liegt die Aufgabe zugrunde, eine Sicherheitsvorrichtung für Maschinen mit rotierenden Teilen zu schaffen, die einfach aufgebaut ist und dabei eine hohe Sicherheit gewährleistet.

Diese Aufgabe wird erfindungsgemäß durch eine Sicherheitsvorrichtung mit den Merkmalen des Anspruchs 1 gelöst.

Erfindungsgemäß ist vorgesehen, dass ein Drehgeber von einer Sicherungsschaltung der Sicherheitsvorrichtung ausgewertet wird, die zwei unabhängige Signalverarbeitungszweige aufweist. Ein erster Signalverarbeitungszweig ist hardwarebasiert und separat davon ist der zweite Signalverarbeitungszweig ausgebildet, welcher softwarebasiert ist. Somit werden zwei unterschiedliche Signalverarbeitungsprinzipien genutzt um eine Fehleranfälligkeit, die bei der bekannten Verwendung zweier identischer Signalverarbeitungszweige vorhanden sein könnte, zu vermeiden. Es hat sich gezeigt, dass die Kriterien bei denen eine Funktionsstörung erfolgt bei einer hardwarebasierten Signalverarbeitung andere sind als bei einer softwarebasierten Signalverarbeitung. Dadurch wird gegenüber der redundanten Ausführung zweier identischer Signalverarbeitungszweige eine deutlich erhöhte Redundanz bei der Signalauswertung des Drehsignalgebers erzielt, ohne dass zwei getrennte Drehgeber eingesetzt werden müssen. Es wird also gleichzeitig der Montageaufwand und Justieraufwand erheblich reduziert ohne dass deswegen Abstriche bei der Sicherheit gemacht werden müssten.

Eine Maschine, insbesondere eine Werkzeugmaschine oder Schneidemaschine kann mit Hilfe der Sicherheitsschaltung die Betriebssicherheit deutlich verbessern, indem die Sicherheitsschaltung eine Zuhaltung ansteuert, die eine den Gefahrenbereich abdeckende Abdeckhaube im Betrieb verriegelt. Der Gefahrenbereich kann dabei insbesondere der Bereich sein, in dem rotierende Teile einer Werkzeugmaschine bspw. ein Fräskopf oder ein rotierendes Schneidmesser einer Schneidemaschine angeordnet ist. Das Öffnen der Haube wird von der Sicherheitsschaltung dann so lange sicher verhindert, bis das rotierende Teil, insbesondere ein Schneidmesser oder ein Fräskopf steht oder sich mit einer geringen, ungefährlichen Drehzahl, der Grenzdrehzahl, bewegt.

Es ist vorgesehen, dass je Drehachse nur ein einziger Drehgeber notwendig ist. Dazu kann der Drehgeber insbesondere zwei getrennte Kanäle oder Ausgänge aufweisen, wobei dann der erste Ausgang an den hardwarebasierten Signalverarbeitungszweig angeschlossen ist und der zweite Ausgang an den softwarebasierten Signalverarbeitungszweig angeschlossen ist. Es können auch Drehgeber mit mehr als zwei Kanälen oder Ausgängen verwendet werden. Die weiteren Ausgänge können dann beispielsweise zur Drehzahlermittlung verwendet werden oder weitere Sicherheitskreise ansteuern.

Weiter kann vorgesehen sein, dass der Drehgeber an den Ausgängen jeweils ein drehzahlabhängiges Wechselspannungssignal ausgibt, wobei das Wechselspannungssignal des einen Ausgangs zu dem Wechselspannungssignal des anderen Ausgangs eine bestimmte Phasenverschiebung aufweist. Es kann vorgesehen sein, dass die Sicherheitsschaltung die Phasenverschiebung des Wechselspannungssignals auswertet. Über eine Plausibilitätsprüfung kann die Sicherungsschaltung auf diese Art und Weise beispielsweise einen Fehler des Drehgebers detektieren. Wenn nun z. B. die Phasenverschiebung der beiden Signale fehlt oder von dem bestimmten Wert abweicht oder dauerhaft ein konstanter Spannungs-Pegel an einem oder beiden Ausgängen anliegt, so liegt höchstwahrscheinlich ein Fehler vor. In diesem Fall stoppt die Sicherungsschaltung den Antriebsmotor des rotierenden Teils und zeigt ein Fehlersignal an.

Es ist vorgesehen, dass die Wechselspannungssignale jeweils den entsprechenden Signalverarbeitungszweig triggern. So weist der hardwarebasierte Signalverarbeitungszweig eine monostabile Kippstufe auf, die von dem ersten Ausgangssignal des Drehgebers getriggert ist. Der softwarebasierte Signalverarbeitungszweig weist eine timergesteuerte Programmschleife auf, die von dem zweiten Ausgangssignal des Drehgebers getriggert ist. Wenn dann die Frequenz der Ausgangssignale hoch genug ist, so steht am Ausgang der Signalverarbeitungszweige ein konstantes Signal an. Sinkt die Frequenz des Ausgangssignales des Drehgebers mit der Drehzahl des rotierenden Teils ab, so wechselt auch das Ausgangssignal des Signalverarbeitungszweiges.

Insbesondere kann der hardwarebasierte Signalverarbeitungszweig aus diskreten Bauteilen und integrierten Schaltkreisen aufgebaut sein und der softwarebasierte Signalverarbeitungszweig einen Mikroprozessor aufweisen. Dadurch können beide Signalverarbeitungszweige nebeneinander auf einer Platine aufgebaut sein.

Eine weiter erhöhte Sicherheit ergibt sich, wenn der softwarebasierte Signalverarbeitungszweig ein Programmmodul zum Testen von Baugruppen wie z. B. dem Mikroprozessor oder einem Speicherbaustein oder einem Schnittstellenbaustein aufweist.

Eine Anwendung der Sicherheitsvorrichtung kann bei allen Maschinen mit gefährlichen rotierenden Teilen erfolgen, wie beispielsweise Werkzeugmaschinen oder Schneidemaschinen oder Fräsmaschinen.

Weitere Ausführungsbeispiele der Erfindung sind in den Figuren dargestellt und der dazugehörenden Beschreibung beschrieben.

### Es zeigen,

Figur 1: Einen schematischen Aufbau der Sicherheitsvorrichtung;
Figur 2: Die Ausgangssignale eines Drehgebers mit drei Ausgängen;

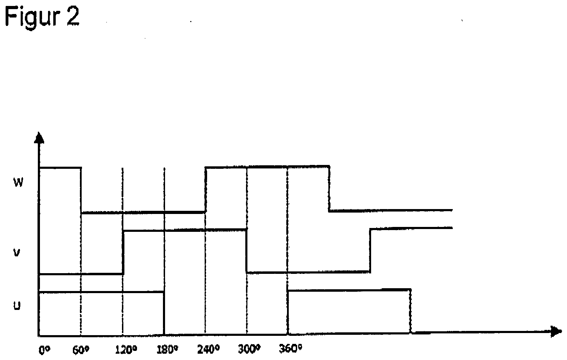

Figur 2: Eine Brotschneidemaschine mit erfindungsgemäßer Sicherheitsvorrichtung.

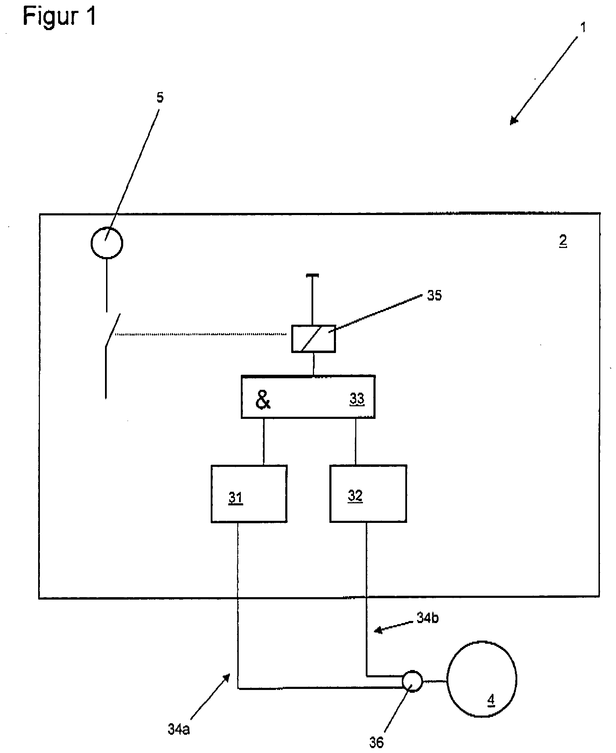

In **Figur 1** ist eine schematische Darstellung der erfindungsgemäßen Sicherheitsvorrichtung 1 gezeigt. Die Sicherheitsvorrichtung 1 umfasst eine Sicherheitsschaltung 2 mit einem Relais 35, welches eine Zuhaltung 5 einer Abdeckhaube ansteuert. Das Relais wird über eine Logikschaltung 33 angesteuert, die eine UND-Verknüpfung von zwei getrennten Signalverarbeitungszweigen 31 und 32 vornimmt. Erst wenn beide, separat ausgebildeten Signalverarbeitungszweige 31 und 32, unabhängig voneinander melden, dass das überwachte rotierende Teil 81 steht oder sich unterhalb einer einstellbaren Grenzdrehzahl dreht, dann steuert die Logikschaltung 33 das Relais 35 zur Freigabe der Verriegelung 5 an.

Die Signalverarbeitungszweige 31 und 32 erhalten jeweils ein Eingangssignal von einem Drehgeber 36 der Sicherheitsvorrichtung 1. Der Drehgeber 36 weist einen ersten Ausgang 34a auf, der mit dem ersten Signalverarbeitungszweig 31 verbunden ist und einen zweiten Ausgang 34b auf, der mit dem zweiten Signalverarbeitungszweig 32 verbunden ist, auf. Der Drehgeber 36 überwacht die Drehzahl eines Antriebsmotors 4, der eine Schneideinrichtung antreibt.

Der erste Signalverarbeitungszweig 31 ist als hardwarebasierter Signalverarbeitungszweig 31 ausgebildet. Er ist aus einzelnen miteinander verdrahteten Bausteinen aufgebaut. Er weist eine monostabile Logik, ein Monoflop auf um die von dem Drehgeber 36 gelieferten Wechselspannungssignale auszuwerten. Die Wechselspannungssignale 34a triggern dabei das Monoflop, so dass bei höherer Frequenz der Ausgang des Monoflops konstant eingeschaltet wird.

Der zweite Signalverarbeitungszweig 32 ist als softwarebasierter Signalverarbeitungszweig 32 ausgebildet. Er weist einen Mikroprozessor auf, auf dem ein ablauffähiges Programm mit einer timergesteuerten oder zeitbasierten Schleife abläuft, um die von dem Drehgeber 36 gelieferten Wechselspannungssignale auszuwerten. Die Wechselspannungssignale 34b triggern dabei den Timer, so dass bei höherer Frequenz der Ausgang des Programmschleife konstant eingeschaltet wird.

Über die UND-Logik 33 werden diese beiden Signale dann ausgewertet und das Relais 35 der Zuhaltung angesteuert.

Der Drehgeber 36 liefert an seinen Ausgängen 34a und 34b drehzahlabhängige Wechselspannungssignale, die beispielhaft in der **Figur 2** dargestellt sind. In Figur 2 ist das Ausgangssignal des dreiphasigen Drehgebers mit den Phasen U, V und W dargestellt. Die Phase W steuert den Ausgang 34a, die Phase V steuert den Ausgang 34b und die Phase U steuert eine nicht weiter dargestellte Drehzahlerfassung des Motors 4 an.

Die Phasen des Drehgebers 36 sind gegeneinander um den Betrag von 60° phasenverschoben. Dadurch liegt an keinem der Ausgänge ein konstantes Signal an, oder dasselbe Signal wie an einem der anderen Ausgänge des Drehgebers 36. Über eine Auswertung dieser Phasenverschiebung wird eine Funktionsüberwachung des Drehgebers 36 realisiert. Wenn die Phasenverschiebung bei laufendem Motor wesentlich von 60° abweicht oder kein Wechselspannungssignal vorliegt, wird von der Sicherheitsvorrichtung ein Fehlerfall detektiert und der Antriebsmotor 4 gestoppt.

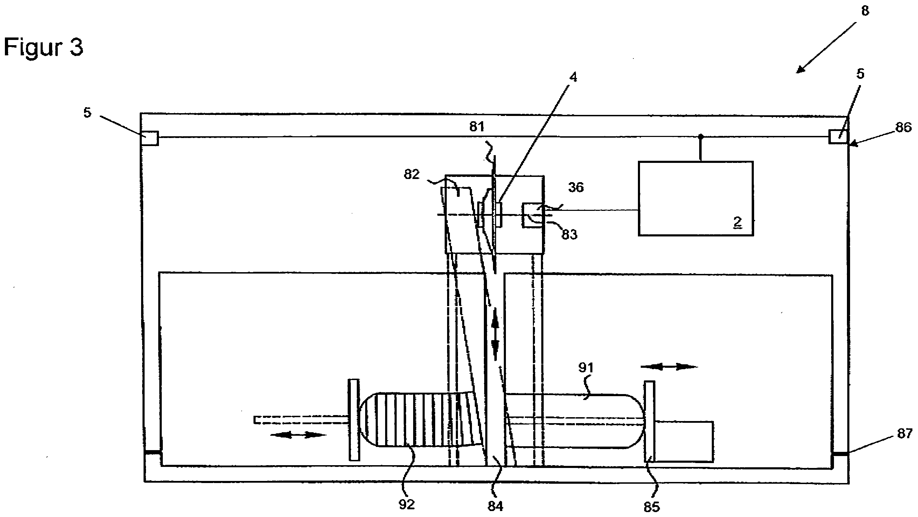

In der **Figur 3** ist eine Brotschneidemaschine 8 mit der erfindungsgemäßen Sicherheitsschaltung 1 schematisch dargestellt. Die Brotschneidemaschine 8 weist ein Gehäuse mit einem Schneidebereich zum Schneiden von Brot 91 auf. Eine Schneidgutaufnahme mit einem Schneidguthalter 85 hält das Schneidgut und taktet es über eine Zuführeinrichtung dem Schneidebereich 84 zu. Die abgetrennten Brotscheiben 92 werden hinter dem Schneidebereich 84 aufgenommen.

Eine Abdeckhaube 86 ist an dem Gehäuse der Brotschneidemaschine 8 über Gelenke 87 schwenkbar gelagert und deckt den Gefahrenbereich, vor allem den Schneidebereich 84 ab. Zu beiden Seiten der Abdeckhaube 86 sind Zuhaltungen 5 vorgesehen, die von der Sicherheitsschaltung 2 zum Freigeben und Verriegeln der Abdeckhaube 86 angesteuert werden.

Die Sicherheitsschaltung 2 wertet die Signale eines Drehgebers 36 aus, der auf der Drehachse 83 eines Schneidmessers 81 sitzt. Das Schneidmesser 81 wird von einem Antriebsmotor 4 angetrieben und über einen Messerarm in Richtung des Schneidebereichs 84 verfahren, um einzelne Scheiben 92 von dem Schneidgut 91 abzutrennen.

Über einen Sicherheitsschalter wird die Position der Abdeckhaube 86 von der Sicherheitsschaltung 2 ausgewertet und der Antriebsmotor 4 erst gestartet, wenn die Abdeckhaube 86 geschlossen und die Zuhaltung 5 verriegelt ist.

Während des Schneidbetriebs überwacht die Sicherheitsschaltung 2 die Drehzahl des Messers 81 und sperrt die Abdeckhaube 86 so lange gegen öffnen, bis die Messerdrehzahl unter einen ungefährlichen Grenzwert gefallen ist oder ganz steht.

## Patentansprüche

1. Sicherheitsvorrichtung für eine Maschine (8) mit einem motorisch angetriebenen rotierenden Teil (81), mit einer Haube (86) zum Abdecken des rotierenden Teils im Betrieb und einer Zuhaltung (5) zum Sperren der Haube (86), und mit einem Drehgeber (36) zum Überwachen des rotierenden Teils (81), wobei eine Sicherungsschaltung (2) die Zuhaltung zum Öffnen der Haube (86) freigibt sobald das rotierende Teil (81) steht oder dessen Drehzahl unter eine Grenzdrehzahl gefallen ist,
**dadurch gekennzeichnet,**
**dass** je Drehachse (83) nur ein einziger Drehgeber (36) mit wenigstens zwei Ausgängen (34a, 34b) verwendet wird, und dass die Sicherungsschaltung (2) zum Auswerten des Drehgebers (36) einen hardwarebasierten Signalverarbeitungszweig (31) umfasst, der eine monostabilen Kippstufe aufweist und mit einem ersten Ausgang (34a) des Drehgebers (36) verbunden ist und einen davon unabhängigen softwarebasierten Signalverarbeitungszweig (32) umfasst, der eine timergesteuerte Programmschleife aufweist und mit einem zweiten Ausgang (34b) des Drehgebers (36) verbunden ist, und dass die Sicherungsschaltung (2) die Zuhaltung (5) erst dann freigibt, wenn beide Signalverarbeitungszweige (31, 32) einen Stillstand oder eine Unterschreitung der Grenzdrehzahl melden.

2. Sicherheitsvorrichtung nach Anspruch 1,
**dadurch gekennzeichnet,**
**dass** der Drehgeber (36) an seinen beiden Ausgängen (34a, 34b) jeweils ein drehzahlabhängiges Wechselspannungsignal ausgibt, welches zu dem jeweils anderen Ausgang eine bestimmte Phasenverschiebung aufweist.

3. Sicherheitsvorrichtung nach Anspruch 2,
**dadurch gekennzeichnet,**
**dass** die Sicherungsschaltung (2) eine Phasenverschiebung des Drehgebers (36) auswertet.

4. Sicherheitsvorrichtung nach Anspruch 2 oder 3,
**dadurch gekennzeichnet,**
**dass** die Sicherungsschaltung (2) bei Betrieb des Antriebsmotors (4) bei gleicher Phasenlage des Wechselspannungsignals an den Ausgängen (34a, 34b) des Drehgebers (36) oder einem konstanten Pegel an einem der Ausgänge (34a, 34b) einen Fehler detektiert und vorzugsweise den Antriebsmotor (4) des rotierenden Teils (81) stoppt.

5. Sicherheitsvorrichtung nach einem der Ansprüche 1 bis 4,
**dadurch gekennzeichnet,**
**dass** der hardwarebasierte Signalverarbeitungszweig (31) mit diskreten Bausteinen und integrierten Schaltkreisen aufgebaut ist.

6. Sicherheitsvorrichtung nach einem der Ansprüche 1 bis 5,
**dadurch gekennzeichnet,**
**dass** der softwarebasierte Signalverarbeitungszweig (32) einen Mikroprozessor aufweist.

7. Sicherheitsvorrichtung nach Anspruch 6,
**dadurch gekennzeichnet,**
**dass** der softwarebasierte Signalverarbeitungszweig (32) ein Programmmodul zum Test des Mikroprozessors aufweist.

8. Schneidemaschine mit einer Sicherheitsvorrichtung nach einem der vorhergehenden Ansprüche und mit einem motorisch angetriebenen Messer (81) zum Schneiden von vorzugsweise strangförmigen Lebensmitteln (91), wobei das Messer (81) von einer Haube (86) abgedeckt und die Haube (86) während des Schneidens von einer Zuhaltung (5) verriegelt ist und die Entriegelung der Zuhaltung (5) durch die Sicherheitsvorrichtung angesteuert ist.

## Claims

1. Safety device for a machine (8) having a rotating part (81) driven by a motor, having a cover (86) for covering the rotating part during operation and a guard lock (5) for blocking the cover (86), and having a rotary encoder (36) for monitoring the rotating part (81), wherein a safety circuit (2) releases the guard lock in order to open the cover (86) as soon as the rotating part (81) is stationary or its rotational speed has dropped below a limit rotational speed,
**characterized in that**
only a single rotary encoder (36) having at least two outputs (34a, 34b) is used per axis of rotation (83), and **in that** the safety circuit (2), in order to evaluate the rotary encoder (36), comprises a hardware-based signal processing branch (31) that has a monostable flip-flop and is connected to a first output (34a) of the rotary encoder (36) and comprises a software-based signal processing branch (32) that is independent thereof and that has a timer-controlled program loop and is connected to a second output (34b) of the rotary encoder (36), and **in that** the safety circuit (2) releases the guard lock (5) only when both signal processing branches (31, 32) report a stationary state or undershooting of the limit rotational speed.

2. Safety device according to Claim 1,
**characterized**
**in that** the rotary encoder (36) outputs a respective rotational speed-dependent AC voltage signal at its two outputs (34a, 34b), which signal has a particular phase offset with respect to the respective other output.

3. Safety device according to Claim 2,
**characterized**
**in that** the safety circuit (2) evaluates a phase offset of the rotary encoder (36).

4. Safety device according to Claim 2 or 3, **characterized**
**in that** the safety circuit (2) detects a fault during operation of the drive motor (4) in the event of an identical phase position of the AC voltage signal at the outputs (34a, 34b) of the rotary encoder (36) or a constant level at one of the outputs (34a, 34b) and preferably stops the drive motor (4) of the rotating part (81) .

5. Safety device according to one of Claims 1 to 4, **characterized**
**in that** the hardware-based signal processing branch (31) is constructed using discrete components and integrated circuits.

6. Safety device according to one of Claims 1 to 5, **characterized**
**in that** the software-based signal processing branch (32) has a microprocessor.

7. Safety device according to Claim 6,
**characterized**
**in that** the software-based signal processing branch (32) has a program module for testing the microprocessor.

8. Cutting machine having a safety device according to one of the preceding claims and having a blade (81), driven by a motor, for cutting preferably extruded foodstuffs (91), wherein the blade (81) is covered by a cover (86) and the cover (86) is locked by a guard lock (5) during cutting and unlocking of the guard lock (5) is driven by the safety device.

## Revendications

1. Dispositif de sécurité pour une machine (8), comprenant une pièce tournante motorisée (81), un capot (86) pour recouvrir la pièce tournante en cours de fonctionnement et un dispositif de verrouillage (5) pour verrouiller le capot (86), et un encodeur (36) pour surveiller la pièce tournante (81), dans lequel un circuit fusible (2) libère le dispositif de verrouillage pour ouvrir le capot (86) dès que la pièce tournante (81) est à l'arrêt ou que sa vitesse de rotation est tombée sous une vitesse de rotation limite, **caractérisé en ce que** pour chaque axe de rotation (83), un seul encodeur (36) avec au moins deux sorties (34a, 34b) est utilisé, et **en ce que** le circuit fusible (2) comprend une branche de traitement de signal matériel (31) pour évaluer l'encodeur (36), qui présente une bascule monostable et qui est reliée à une première sortie (34a) de l'encodeur (36), et comprend une branche de traitement de signal logiciel (32) indépendante de celle-ci, qui présente une boucle de programme commandée par minuterie et est reliée à une deuxième sortie (34b) de l'encodeur (36), et **en ce que** le circuit fusible (2) ne libère le dispositif de verrouillage (5) que si les deux branches de traitement de signal (31, 32) signalent un arrêt ou un soupassement de la vitesse de rotation limite.

2. Dispositif de sécurité selon la revendication 1, **caractérisé en ce que** l'encodeur (36) présente au niveau de ses deux sorties (34a, 34b) respectivement un signal de tension alternative en fonction de la vitesse de rotation et qui présente un certain déphasage par rapport à l'autre sortie respectivement.

3. Dispositif de sécurité selon la revendication 2, **caractérisé en ce que** le circuit fusible (2) évalue un déphasage de l'encodeur (36).

4. Dispositif de sécurité selon la revendication 2 ou 3, **caractérisé en ce qu'**en cours de fonctionnement du moteur d'entraînement (4), le circuit fusible (2) détecte une erreur pour une position de phase identique du signal de tension alternative aux sorties (34a, 34b) de l'encodeur (36) ou un niveau constant à l'une des sorties (34a, 34b) et coupe de préférence le moteur d'entraînement (4) de la pièce tournante (81).

5. Dispositif de sécurité selon l'une quelconque des revendications 1 à 4, **caractérisé en ce que** la branche de traitement de signal matérielle (31) est réalisée avec des modules discrets et des circuits intégrés.

6. Dispositif de sécurité selon l'une quelconque des revendications 1 à 5, **caractérisé en ce que** la branche de traitement de signal logiciel (32) présente un microprocesseur.

7. Dispositif de sécurité selon la revendication 6, **caractérisé en ce que** la branche de traitement de signal logiciel (32) présente un module de programme pour tester le microprocesseur.

8. Machine à trancher, comprenant un dispositif de sécurité selon l'une quelconque des revendications précédentes et une lame motorisée (81) pour trancher des aliments (91) de préférence de forme allongée, dans laquelle la lame (81) est couverte par un capot (86) et le capot (86) est verrouillé par un dispositif de verrouillage (5) pendant le tranchage et le déverrouillage du dispositif de verrouillage (5) est piloté par le dispositif de sécurité.
